# EUROPÄISCHE PATENTSCHRIFT

(11) **EP 2 004 477 B1**
(45) Veröffentlichungstag und Bekanntmachung des Hinweises auf die Patenterteilung: **12.08.2009**
(21) Anmeldenummer: 07723979.6
(22) Anmeldetag: 04.04.2007
(51) Int. Cl.: B62D 33/06, B62D 1/16

(54) **FAHRERHAUS EINES NUTZFAHRZEUGS MIT IN DIE TRAGENDE STRUKTUR INTEGRIERTEN KABINENBAUTEILEN**
DRIVER'S CAB OF A COMMERCIAL VEHICLE HAVING CAB COMPONENTS WHICH ARE INTEGRATED INTO THE LOADBEARING STRUCTURE
HABITACLE DE CONDUITE POUR UN VEHICULE UTILITAIRE COMPRENANT DES COMPOSANTS DE CABINE INTEGRES DANS LA STRUCTURE PORTANTE

(30) Priorität: 04.04.2006 DE 102006015650
(43) Veröffentlichungstag der Anmeldung: 24.12.2008
(73) Patentinhaber: KNORR-BREMSE Systeme für Nutzfahrzeuge GmbH, 80809 München (DE)
(72) Erfinder: RIECK, Gerhard, 81247 München (DE); HERGES,Michael, 80935 München (DE); STOCKER, Jürgen, 70469 Stuttgart (DE); JONES, Gary, 71679 Asperg (DE); BATTISTELLA, Denis, I-20037 Paderno Dugnano (IT)
(74) Vertreter: Schönmann, Kurt
(86) Internationale Anmeldenummer: PCT/EP2007/003038
(87) Internationale Veröffentlichungsnummer: WO 2007/115764

(56) Entgegenhaltungen:
- EP-A- 0 240 116
- WO-A-00/71407
- WO-A-20/05066008
- AT-B- 317 000
- DE-A1- 2 754 678
- DE-A1- 2 831 753
- US-B1- 6 591 927

## Beschreibung

Stand der Technik

Die Erfindung geht aus von einem Fahrerhaus eines Nutzfahrzeugs, gemäß dem Oberbegriff von Anspruch 1.

Aus dem Stand der Technik sind Fahrerhäuser bekannt, bei welchen das Mantelrohr der Lenksäule und der Pedalträger getrennte Baueinheiten darstellen, welche an der tragenden Struktur des Fahrerhauses befestigt sind.

Gemäß der gattungsbildenden WO 00/71407 A1 beinhaltet das Fahrerhaus eine Lenksäule umfassend eine in einem Mantelrohr drehbar gelagerte Lenkspindel und wenigstens einen Pedalträger, an welchem wenigstens ein Fahrpedal gelagert ist, wobei wenigstens das Mantelrohr der Lenksäule und der Pedalträger zu einer gemeinsamen Baueinheit zusammengefasst sind, welche einen Teil der tragenden Struktur des Fahrerhauses bildet.

Gemäß der US 4 597 461 A1 wird ein vorgefertigtes Modul für den Cockpit-Bereich eines Fahrzeugs vorgeschlagen, welches von einer vorderen, den Motorraum begrenzenden Spritzwand getragen wird. Die US 2005/028 offenbart ein eine Lenksäule und eine Pedalerie eines Fahrzeugs zusammenfassendes Modul.

Der vorliegenden Erfindung liegt demgegenüber die Aufgabe zugrunde, ein Fahrerhaus der eingangs erwähnten Art derart weiter zu entwickeln, dass durch eine Integration weiterer Komponenten die Montage vereinfacht und die Funktionssicherheit erhöht wird.

Diese Aufgabe wird erfindungsgemäß durch die Merkmale von Anspruch 1 gelöst.

### Offenbarung der Erfindung

Gemäß Patentanspruch 1 sind wenigstens das Mantelrohr der Lenksäule und der Pedalträger nicht wie beim Stand der Technik lediglich an der tragenden Struktur befestigt sind, sondern Teile der tragenden Struktur des Fahrerhauses selbst bilden. In dem diese Bauteile in die tragende Struktur des Fahrerhauses einbezogen werden, tragen sie vorteilhaft zur Erhöhung von deren Steifigkeit bei. Dadurch wird beispielsweise durch Materiaieinsparungen wie weiniger Rahmenteile, Versteifungsrippen oder -sicken weniger Gewicht wie auch eine flexiblere Gestaltung der tragenden Struktur möglich. Nicht zuletzt trägt die Funktionsvereinigung als Trägerbauteile wenigstens für die Lenkspindel und die Fahrpedale und zugleich als Strukturbauteil zur Kostenersparnis bei.

Weiterhin sind das Mantelrohr der Lenksäule und der Pedalträger zu einer gemeinsamen Baueinheit zusarrimengefasst, welche Teil der tragenden Struktur des Fahrerhauses ist. Diese Zusammenfassung in einer baulichen Einheit kann beispielsweise durch eine einstückige Ausführung des Mantelrohrs der Lenksäule und des Pedalträgers oder durch Aneinanderflanschen der Einzelbauteile oder Baugruppen erfolgen.

Erfindungsgemäß sind zusätzlich wenigstens folgende Bauteile oder Baugruppen mit der Baueinheit zu einem separat vorfertigbaren Modul zusammengefasst:
a) wenigstens ein elektronisches Steuergerät für eine oder mehrere Fahrzeugfunktionen,
b) wenigstens ein an der Frontwand befestigter Kühlergrill,
c) das Lenkrad,
d) wenigstens ein Airbag-System inklusive wenigstens eines Beschleunigungssensors,
e) wenigstens ein Radarsensor einer adaptiven Geschwindigkeitsregelung (ACC),
f) wenigstens ein an der Frontwand gehaltener Scheinwerfer und/oder wenigstens eine Signalleuchte,
g) eine an der Frontwand gelagerte Motorhaube,
h) ein Fahrpedal wie ein Brems-, Gas- oder Kupplungspedal,
i) wenigstens ein Sensor zur Aufnahme von Bewegungen der Lenkspindel und/oder der Fahrpedale.

Durch diese Maßnahme wird die Fertigung des Fahrerhauses erleichtert, da das separate Modul eine einfachere Montage der genannten Bauteile und Baugruppen ermöglicht als dies bei einem bereits am Nutzfahrzeuge montierten Fahrerhaus der Fall ist. Dies trägt ebenfalls zu einer Reduzierung der Fertigungskosten bei.

Weil die Pedal- bzw. die Lenkspindetbewegungen in der Regel von elektrische Drehwinkel- oder Wegaufnehmern detektiert und die sensierten Signale von elektronischen Steuergeräten im Rahmen einer Regelstruktur in Stellsignale für entsprechende Aktoren gewandelt werden, bietet die Integration solcher Steuergeräte in das Modul den Vorteil einer kürzeren, mit weniger Aufwand zu verlegenden und weniger störungsanfälligen Verkabelung. Weiterhin ist das Fahrerhaus eines Nutzfahrzeugs in der Regel gegenüber dem Rahmen kippbar ausgeführt, so dass ein Verbindungskabel, beispielsweise in Form eines CAN-Datenbusses zu einem außerhalb des Fahrerhauses angeordneten Steuergerät einer gewissen mechanischen Beanspruchung ausgesetzt wäre.

Nicht zuletzt können die Elemente der den Fahrzeugfunktionen zugeordneten Regelstrukturen wie die Sensorik, das Steuergerät, die Verkabelung und u.U. auch die Aktoren in das Modul integriert werden, weil dadurch die Konfiguration und Testläufe vor der Montage des Moduls am Nutzfahrzeug möglich sind und damit die Ausfallsicherheit erhöht wird.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer Fortbildung können die tragende Struktur und die Baueinheit aus Mantelrohr der Lenksäule und dem Pedalträger so ausgeführt sein, dass sowohl rechts- als auch linksgelenkte Nutzfahrzeuge realisierbar sind. Dies reduziert die Variantenvielfalt und trägt zur Kostenersparnis bei.

Zur weiteren Erhöhung der Steifigkeit des Fahrerhauses kann ein ein- oder mehrteiliges Armaturenbrett ebenfalls Teil der tragenden Struktur sein, wodurch sich die bereits oben beschriebenen Vorteile ergeben. Gemäß einer Weiterbildung dieser Maßnahmen kann das Armaturenbrett wenigstens teilweise Bestandteil einer Deformationszone des Fahrerhauses sein, wodurch es eine ebenfalls Gewicht sparende Doppelfunktion ausübt. Nicht zuletzt ist dadurch eine weitere Struktur vorhanden, um das Deformationsverhalten des Fahrerhauses zu beeinflussen.

Dabei können in das Modul beliebige Fahrzeugfunktionen steuernde Steuergeräte integriert sein, insbesondere ein zentrales Fahrzeugsteuergerät, ein Bremssteuergerät eines elektronischen Bremssystems (EBS), ein Steuergerät eines elektronischen Stabilitätsprogramms (ESP) oder ein Airbag-Steuergerät.

Genaueres geht aus der folgenden Beschreibung eines Ausführungsbeispiels hervor.

### Zeichnung

Nachstehend ist ein Ausführungsbeispiet der Erfindung in der Zeichnung dargestellt und in der nachfolgenden Beschreibung näher erläutert. In der Zeichnung zeigt
- Fig.1: eine stark schematisierte Rückansicht einer Frontwand eines Fahrerhauses eines Nutzfahrzeugs, bei welcher die Erfindung gemäß einer bevorzugten Ausführungsform verwirklicht ist:
- Fig.2: einen Ausschnitt von Fig.1 in Form einer Baueinheit bestehend aus dem Mantelrohr der Lenksäule und dem Pedalträger.

### Beschreibung des Ausführungsbeispiels

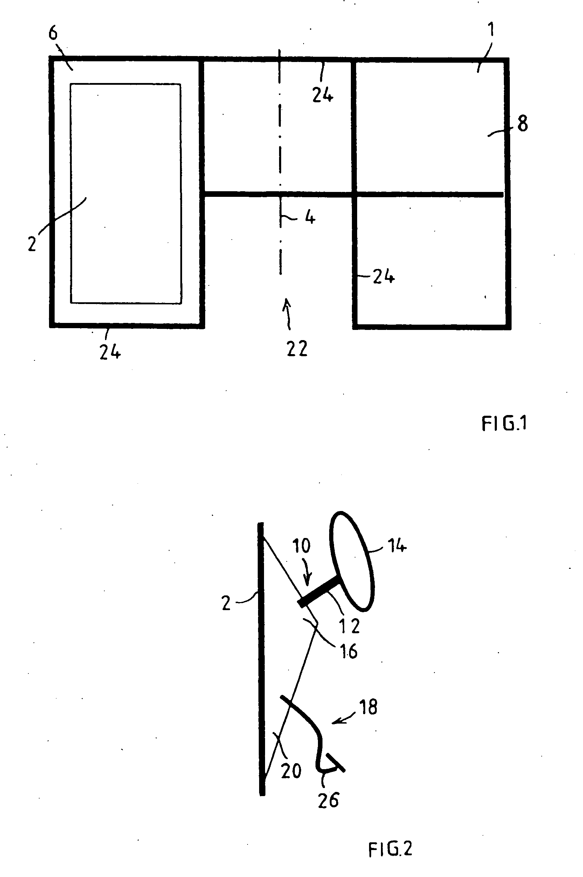

In Fig.1 ist eine Rückansicht einer Frontwand 1 eines Fahrerhauses eines Nutzfahrzeugs schematisch gezeigt, d.h. die Blickrichtung richtet sich vom Inneren des Fahrerhauses auf die Frontwand 1. Zu erkennen sind bezogen auf eine zentrale Vertikalachse 4 im wesentlichen symmetrische Hälften 6, 8, wobei für eine Standardausführung eine Lenksäule 10 mit dem eine Lenkspindel 12 für ein Lenkrad 14 lagernden Mantelrohr 16 und ein an einem Pedalträger 20 befestigtes Pedalmodul 18 umfassend Fahrpedale 26 wie beispielsweise ein Gaspedal, ein Bremspedal, ein Kupplungspedal sowie eine Sensorik zur Aufnahme der Pedalbewegungen in der linken Hälfte 6 angeordnet, aber aus zeichnerischen Gründen nicht in Fig.1, sondern in Fig.2 dargestellt sind.

In diesem Fall ist die Lagerung für die Fahrpedale 26 am Pedalmodul 18 ausgebildet, so dass der Pedalträger 20 lediglich in einer Lagerplatte oder Aufnahme für das Pedalmodul 18 besteht. Gemäß einer Alternative könnten die Fahrpedale 26 aber auch direkt am Pedalträger 20 aufgenommen sein, welcher dann neben den Pedallagern auch die Weg- oder Winkelaufnehmer-Sensorik aufnehmen muss.

Dabei bilden wenigstens das Mantelrohr 16 der Lenksäule 10 und der Pedalträger 20 Teile der tragenden Struktur des Fahrerhauses, welche unter anderem die Frontwand 1 und mit dieser verbundene Rahmenteile 24 umfasst. Unter der tragenden Struktur des Fahrerhauses sollen weiterhin alle diejenigen Strukturbauteile wie beispielsweise Rahmen, Scheiben, Front-, Seiten-, und Rückwände, das Dach, der Boden, sowie alle Versteifungen verstanden werden, welche zur Erzielung der gewünschten Festigkeit und (Biege-, Torsions-) Steifigkeit des Fahrerhauses einen Beitrag leisten und welche von dem durch Eigengewicht oder äußere Kräfte bedingten Kraftfluss erfasst sind.

Besonders bevorzugt sind dabei wenigstens das Mantelrohr 16 der Lenksäule 10 und der Pedalträger 20 zu einer gemeinsamen Baueinheit 2 zusammengefasst, welche Teil der tragenden Struktur 1, 24 des Fahrerhauses und mit dieser stoff-, kraft- oder formschlüssig verbunden ist. Diese Zusammenfassung in einer baulichen Einheit 2 kann beispielsweise, wie in Fig.2 gezeigt durch eine einstückige Ausführung des Mantelrohrs 16 der Lenksäule 10 und des Pedalträgers 20 oder durch Aneinanderflanschen der Einzelbauteile oder Baugruppen 16, 20 erfolgen.

Die Frontwand 1 des Fahrerhauses 2 und die Baueinheit 2 aus Mantelrohr 16 und Pedalträger 20 können so ausgeführt sein, dass sowohl rechts- als auch linksgelenkte Nutzfahrzeuge realisierbar sind, ohne dass die Frontwand 1 oder die Baueinheit 2 verändert werden müssten. Zu diesem Zweck können beispielsweise in der linken Hälfte 6 und in der rechten Hälfte 8 der Frontwand 1 identische Aufnahmen, Anschlüsse oder Aussparungen für die Baueinheit 2 vorgesehen sein, an welchen diese aufgenommen und mit welchen sie stoff-, form- oder kraftschlüssig verbunden werden kann. Die Aufnahmen, Anschlüsse oder Aussparungen sind dabei so ausgebildet, dass wenigstens ein Teil des in ihrem Bereich vorhandenen Kraftflusses durch oder entlang der Baueinheit 2 geleitet wird. Auf diese Weise wird die Baueinheit 2 in die tragende Struktur des Fahrerhauses integriert, hier in die Frontwand 1 und deren Rahmenteile 24.

Zur weiteren Erhöhung der Steifigkeit des Fahrerhauses 2 kann ein an der Frontwand 1 befestigtes ein- oder mehrteiliges, in den Figuren nicht gezeigtes Armaturenbrett ebenfalls Teil der tragenden Struktur 1, 24 sein. Gemäß einer Weiterbildung dieser Maßnahmen kann das Armaturenbrett wenigstens teilweise Bestandteil einer Deformationszone des Fahrerhauses 2 sein.

Besonders bevorzugt können wenigstens folgende, in den Figuren nicht gezeigte Bauteile oder Baugruppen mit wenigstens der Frontwand 1 des Fahrerhauses, der Baueinheit 2 aus dem Mantelrohr 16 und dem Pedalträger 20 sowie gegebenenfalls dem Armaturenbrett als tragender Struktur zu einem separat vorfertigbaren Modul 22 zusammengefasst sein :
a) wenigstens ein elektronisches Steuergerät für eine oder mehrere Fahrzeugfunktionen,
b) wenigstens ein an der Frontwand 1 befestigter Kühlergrill,
c) das Lenkrad 14,
d) wenigstens ein am Lenkkrad 14 gehaltenes Airbag-System inklusive wenigstens eines Beschleunigungssensors,
e) wenigstens einen Radarsensor einer adaptiven Geschwindigkeitsregelung (ACC),
f) wenigstens einen an der Frontwand 1 gehaltenen Scheinwerfer und/oder wenigstens eine Signalleuchte,
g) eine an der Frontwand 1 gelagerte Motorhaube,
h) ein Fahrpedal 26 wie ein Brems-, Gas- oder Kupplungspedal,
i) wenigstens einen Sensor zur Aufnahme von Bewegungen der Lenkspindel 12 und/oder der Fahrpedale 26.

Gemäß einer Fortbildung können weitere Teile der tragenden Struktur des Fahrerhauses wie etwa Seitenwände, Boden, Dach und Rahmenteile in das Modul 22 sowie weitere fahrzeugfunktionsbezogene Baugruppen integriert sein.

Nicht zuletzt können in das Modul 22 beliebige Fahrzeugfunktionen steuernde Steuergeräte integriert sein, insbesondere ein zentrales Fahrzeugsteuergerät, ein Bremssteuergerät eines elektronischen Bremssystems (EBS), ein Steuergerät eines elektronischen Stabilitätsprogramms (ESP) oder ein Airbag-Steuergerät.

### Bezugszeichenliste

- 1: Frontwand
- 2: Baueinheit
- 4: Vertikalachse
- 6: Hälfte
- 8: Hälfte
- 10: Lenksäule
- 12: Lenkspindel
- 14: Lenkrad
- 16: Mantelrohr
- 18: Pedaleinrichtung
- 20: Pedalträger
- 22: Modul
- 24: Rahmenteile
- 26: Fahrpedal

## Patentansprüche

1. Fahrerhaus eines Nutzfahrzeugs, beinhaltend eine Lenksäule (10) umfassend eine in einem Mantelrohr (16) drehbar gelagerte Lenkspindel (12) und wenigstens einen Pedalträger (20), an welchem wenigstens ein Fahrpedal (26) gelagert ist, wobei wenigstens das Mantelrohr (16) der Lenksäule (10) und der Pedalträger (20) zu einer gemeinsamen Baueinheit (2) zusammengefasst sind, welche einen Teil der tragenden Struktur (1, 24) des Fahrerhauses bildet, **dadurch gekennzeichnet, dass** zusätzlich wenigstens folgende Bauteile oder Baugruppen mit der Baueinheit (2) zu einem separat vorfertigbaren Modul (22) zusammengefasst sind:
a) wenigstens ein Sensor zur Aufnahme von Bewegungen der Lenkspindel (12) und/oder wenigstens eines Fahrpedals (26),
b) wenigstens ein elektronisches Steuergerät für eine oder mehrere Fahrzeugfunktionen,
c) wenigstens ein Kühlergrill,
d) das Lenkrad (14),
e) wenigstens ein Airbag-System inklusive wenigstens eines Beschleuneigungssensors.
f) wenigstens ein Radarsensor einer adaptiven Geschwindigkeitsregelung (ACC),
g) wenigstens ein Scheinwerfer und/oder wenigstens eine Signalleuchte,
h) eine Motorhaube,
i) das wenigstens eine Fahrpedal (26).

2. Fahrerhaus nach Anspruch 1, **dadurch gekennzeichnet, dass** wenigstens ein Teil (1, 6, 8, 24) der tragenden Struktur und die Baueinheit (2) so ausgeführt sind, dass sowohl rechts- als auch linksgelenkte Nutzfahrzeuge realisierbar sind.

3. Fahrerhaus nach wenigstens einem der vorhergehenden Ansprüche, **dadurch gekennzeichnet, dass** ein ein- oder mehrteiliges Armaturenbrett ebenfalls Teil der tragenden Struktur (1,24) des Fahrerhauses (2) ist.

4. Fahrerhaus nach Anspruch 3, **dadurch gekennzeichnet, dass** das ein- oder mehrteilige Armaturenbrett wenigstens teilweise Bestandteil einer Deformationszone des Fahrerhauses (2) ist.

5. Fahrerhaus nach wenigstens einem der vorhergehenden Ansprüche, **dadurch gekennzeichnet, dass** das elektronische Steuergerät wenigstens eines aus der Gruppe der folgenden Steuergeräte ist:
a) ein zentrales Fahrzeugsteuergerät,
b) ein Bremssteuergerät eines elektronischen Bremssystems (EBS),
c) ein Airbag-Steuergerät,
d) ein Steuergerät eines elektronischen Stabilitätsprogramms (ESP),
e) ein Steuergerät für die adaptive Geschwindigkeitsregelung (ACC) :

6. Fahrerhaus nach wenigstens einem der vorhergehenden Ansprüche, **dadurch gekennzeichnet, dass** der Teil der in das Modul (22) integrierten tragenden Struktur wenigstens eine Frontwand (1, 24) des Fahrerhauses beinhaltet.

## Claims

1. A driver's cab of a commercial vehicle, including a steering column (10), which comprises a steering spindle (12) mounted rotatably in a steering column tube (16), and at least one pedal carrier (20) on which at least one driving pedal (26) is mounted, wherein at least the steering column tube (16) of the steering column (10) and the pedal carrier (20) are combined to form a common constructional unit (2) which forms part of the load-bearing structure (1, 24) of the driver's cab, **characterized in that** in addition at least the following components or assemblies are combined with the constructional unit (2) to form a module (22) which can be premanufactured separately:
a) at least one sensor for recording movements of the steering spindle (12) and/or at least one driving pedal (26),
b) at least one electronic control device for one or more vehicle functions,
c) at least one radiator grill,
d) the steering wheel (14),
e) at least one airbag system including at least one acceleration sensor,
f) at least one radar sensor of an adaption speed control (ASC),
g) at least one headlight and/or at least one signal lamp,
h) an engine hood,
i) the at least one driving pedal (26).

2. The driver's cab as claimed in claim 1,
**characterized in that** at least one part (1, 6, 8, 24) of the load-bearing structure and the constructional unit (2) are designed in such a manner that both right-hand-drive and left-hand-drive commercial vehicles can be realized.

3. The driver's cab as claimed in at least one of the preceding claims, **characterized in that** a single-part or multi-part dashboard is likewise part of the load-bearing structure (1, 24) of the driver's cab (2).

4. The driver's cab as claimed in claim 3,
**characterized in that** the single-part or multi-part dashboard is at least partially part of a deformation zone of the driver's cab (2).

5. The driver's cab as claimed in at least one of the preceding claims, **characterized in that** the electronic control device is at least one of the group of following control devices:
a) a central vehicle control device,
b) a brake control device of an electronic braking system (EBS),
c) an airbag control device,
d) a control device of an electronic stability program (ESP),
e) a control device for the adaption speed control (ASC).

6. The driver's cab as claimed in at least one of the preceding claims, **characterized in that** the part of the load-bearing structure which is integrated in the module (22) includes at least one front wall (1, 24) of the driver's cab.

## Revendications

1. Cabine du conducteur d'un véhicule utilitaire, comprenant une colonne de direction (10) renfermant un arbre de direction logé de manière rotative dans une jupe de colonne de direction (16) et au moins un support de pédale (20), auquel est logé au moins un pédale d'accélérateur (26), dans laquelle au moins ladite jupe de colonne de direction (16) de ladite colonne de direction (10) et ledit support de pédale (20) sont combinés en une seule unité modulaire commune (2), qui constitue une partie de la structure portante (1, 24) de la cabine du conducteur, **caractérisée en ce qu'**au moins les composants ou modules suivants sont combinés au plus avec ladite module modulaire (2) afin de constituer un module (22) apte à être préfabriqué en tant qu'unité séparée :
a) au moins un détecteur à détecter des mouvements dudit arbre de direction (12) et/ou d'au moins un pédale d'accélérateur,
b) au moins un appareil de commande électronique pour une ou plusieurs fonctions du véhicule,
c) au moins un grille de protection du radiateur,
d) le volant de direction (14),
e) au moins un système à coussin gonflable, ci-inclus au moins un détecteur d'accélération,
f) au moins un détecteur de radar d'un système de réglage adaptif de la vitesse (ACC),
g) au moins un phare et/ou au moins un feu de signalisation,
h) un capot,
i) ledit au moins un pédale d'accélérateur.

2. Cabine du conducteur selon la revendication 1, **caractérisée en ce qu'**au moins une partie (1, 6, 8, 24) de la structure portante et ladite unité modulaire (2) sont configurées de façon à permettre la réalisation des véhicules utilitaires à direction à droite ainsi qu'à gauche.

3. Cabine du conducteur selon au moins une quelconque des revendications précédentes, **caractérisée en ce qu'**un tableau de bord en une partie ou en plusieurs parties est également un composant de ladite structure portante (1, 24) de la cabine du conducteur (2).

4. Cabine du conducteur selon la revendication 3, **caractérisée en ce que** ledit tableau de bord en une partie ou en plusieurs parties constitue, au moins en partie, un composant de la zone de déformation de la cabine du conducteur (2).

5. Cabine du conducteur au moins une quelconque des revendications précédentes, **caractérisée en ce que** ledit appareil de commande électronique est au moins un du groupe des appareils de commande suivants :
a) un appareil de commande centrale du véhicule,
b) un appareil de commande des freins d'un système électronique de freinage (EBS),
c) un appareil de commande du coussinet gonflable,
d) un appareil de commande d'un programme électronique de stabilisation (ESP),
e) un appareil de commande pour le réglage adaptif de la vitesse (ACC).

6. Cabine du conducteur selon au moins une quelconque des revendications précédentes, **caractérisée en ce que** la partie de la structure portante intégrée dans ledit module (22) renferme au moins une paroi frontale (1, 24) de la cabine du conducteur.
